# EUROPEAN PATENT APPLICATION

(11) **EP 4 552 951 A1**
(43) Date of publication of application: **14.05.2025**
(21) Application number: 24207217.1
(22) Date of filing: 17.10.2024
(51) Int. Cl.: B62D 21/11, B62D 25/08, B62D 25/20, B60K 1/04

(54) **VEHICLE FRONT PORTION STRUCTURE**

(30) Priority: 08.11.2023 JP 2023191139
(71) Applicant: TOYOTA JIDOSHA KABUSHIKI KAISHA, Aichi-ken, 471-8571 (JP)
(72) Inventor: SAEKI, Koji, TOYOTA-SHI, AICHI-KEN, 471-8571 (JP)
(74) Representative: Cabinet Beau de Loménie

(57) **Abstract**

A vehicle front portion structure includes: a battery crossmember (22) that is disposed at a vehicle front side of a battery (14) arranged under a cabin (44) and that extends in a vehicle width direction; and a suspension member (30) that is disposed at a vehicle front side of the battery crossmember (22) and that is connected at its rear end side to the battery crossmember (22).

## Description

### BACKGROUND

### Technical Field

The present disclosure relates to a vehicle front portion structure.

### Related Art

Japanese Patent Application Laid-open (JP-A) No. 2004-224104 discloses a vehicle front portion structure. In this structure, the vehicle front portion is provided with a dash crossmember that extends in the vehicle width direction and a sub-frame (suspension member) whose rear end portion is secured to the undersurface of the dash crossmember. Moreover, the vehicle front portion is provided with a left and right pair of extension side members that extend in the vehicle front and rear direction and are joined to a left and right pair of front side members. Both end portions of the dash crossmember are joined to the left and right pair of extension side members. The left and right pair of extension side members extend along both vehicle width direction sides of a floor panel of a cabin.

According to JP-A No. 2004-224104, at the time of a frontal impact to the vehicle, the impact load is transmitted from the left and right pair of front side members to the left and right pair of extension side members. Furthermore, the impact load is transmitted from the suspension member to the dash crossmember. The load transmitted to the dash crossmember is dispersed to the pair of extension side members. In this way, in JP-A No. 2004-224104, by dispersing the impact load at the time of a frontal impact to the vehicle, deformation of the cabin is inhibited.

In this connection, electric cars having a battery arranged under the cabin are known. In the case of such electric cars, it is necessary to consider dispersal of the impact load not only with respect to the cabin as in the related art but also the battery. Namely, it is desired to protect the battery from shock at the time of a frontal impact and protect the cabin by dispersing the impact load input to the vehicle front portion.

### SUMMARY

The present disclosure provides a vehicle front portion structure which, in an electric car having a battery disposed under the cabin, can protect the battery from shock at the time of a frontal impact and protect the cabin by dispersing the impact load input to the vehicle front portion.

A vehicle front portion structure of a first aspect includes: a battery crossmember that is disposed at a vehicle front side of a battery arranged under a cabin and that extends in a vehicle width direction; and a suspension member that is disposed at a vehicle front side of the battery crossmember and that is connected at its rear end side to the battery crossmember.

According to the vehicle front portion structure of the first aspect, the suspension member is connected at its rear end side to the battery crossmember. For this reason, the impact load input to the suspension member at the time of a frontal impact to the vehicle is transmitted to the battery crossmember. Because the battery crossmember extends in the vehicle width direction, the impact load input to the battery crossmember is dispersed along the vehicle width direction. It will be noted that "frontal impact" here is a concept including not only a full overlap frontal impact (a head-on impact) but also an offset impact, an oblique impact, and a small overlap impact. Furthermore, "connected" here is a concept including not only a case where the suspension member is directly connected to the battery crossmember but also a case where it is indirectly connected via another member.

Here, the battery crossmember is disposed on the vehicle front side of the battery. At the time of a frontal impact to the vehicle, the battery crossmember receives the impact load and directs the impact load in the vehicle width direction, so direct input of the impact load to the battery is avoided. Thus, the impact load input to the battery is reduced compared with a vehicle front portion structure that does not have the battery crossmember.

Furthermore, the battery crossmember is positioned under the cabin, so the impact load is dispersed in the vehicle width direction under the cabin. Because of this, the impact load at the time of a frontal impact input from the suspension member to vehicle frame members that reinforce the cabin, such as pillars, is reduced.

A vehicle front portion structure of a second aspect is the first aspect, wherein the suspension member is connected to a vehicle front-side surface of the battery crossmember.

According to the vehicle front portion structure of the second aspect, the rear end side of the suspension member is connected to the vehicle front-side surface of the battery crossmember, so the impact load input to the suspension member is input to the vehicle front-side surface of the battery crossmember. For this reason, the distance from the battery to the load input point (site) becomes longer. Furthermore, the impact load transmitted from the vehicle front side in the vehicle rearward direction at the time of a frontal impact is input to the battery crossmember in the shortest distance because it is input from the vehicle front-side surface to the battery crossmember.

A vehicle front portion structure of a third aspect is the first aspect, wherein the rear end side of the suspension member is directly secured to the battery crossmember.

According to the vehicle front portion structure of the third aspect, the impact load at the time of a frontal impact input to the suspension member is directly transmitted to the battery crossmember.

A vehicle front portion structure of a fourth aspect is the second aspect, wherein the suspension member has a left and right pair of side portions that extend in a vehicle front and rear direction, flange portions are formed at rear end sides of the left and right pair of side portions, and the suspension member is secured at the flange portions to the vehicle front-side surface of the battery crossmember.

According to the vehicle front portion structure of the fourth aspect, the impact load at the time of a frontal impact is transmitted in the vehicle rearward direction using the side portions extending in the vehicle front and rear direction as load paths. The impact load traveling from the side portions in the vehicle rearward direction is transmitted to the battery crossmember via the surfaces of the flange portions formed on the rear end sides of the side portions.

A vehicle front portion structure of a fifth aspect is the fourth aspect, wherein the flange portions extend in the vehicle width direction from the rear end sides of the left and right pair of side portions.

According to the vehicle front portion structure of the fifth aspect, the battery crossmember extends in the vehicle width direction, and the flange portions extend in the same direction as the direction in which the battery crossmember extends. Thus, the impact load dispersed outward in the vehicle width direction in the flange portions is transmitted to the battery crossmember, and inside the battery crossmember also the impact load is dispersed in the same direction as is.

A vehicle front portion structure of a sixth aspect is the first aspect, wherein a rear portion of the suspension member is joined to a dash crossmember that extends in the vehicle width direction.

According to the vehicle front portion structure of the sixth aspect, the impact load at the time of a frontal impact is dispersed from the suspension member not only to the battery crossmember but also to the dash crossmember.

A vehicle front portion structure of a seventh aspect is the first aspect, wherein the battery crossmember is joined to a dash crossmember that extends in the vehicle width direction.

According to the vehicle front portion structure of the seventh aspect, the impact load at the time of a frontal impact input from the suspension member to the battery crossmember is transmitted to the dash crossmember.

A vehicle front portion structure of an eighth aspect is the sixth aspect or the seventh aspect, wherein the dash crossmember is joined to front portions of a left and right pair of rockers that extend in a vehicle front and rear direction at both vehicle width direction sides of a vehicle body floor.

According to the vehicle front portion structure of the eighth aspect, at the time of a frontal impact, the impact load input from the suspension member or the battery crossmember to the dash crossmember is dispersed to the left and right pair of rockers disposed on both vehicle width direction sides of the vehicle body floor.

A vehicle front portion structure of a ninth aspect is the sixth aspect or the seventh aspect, wherein the vehicle front portion structure further has a left and right pair of front side members that extend in the vehicle front and rear direction on both vehicle width direction sides of the vehicle front portion, and the dash crossmember is joined to rear portions of the left and right pair of front side members.

According to the vehicle front portion structure of the ninth aspect, the impact load input from the vehicle front side to the front side members at the time of a frontal impact is transmitted to the dash crossmember joined to the rear portions of the front side members. Particularly in the case of an offset impact, an oblique impact, and a small overlap impact, the impact load is to a great extent input to one of the front side members. At this time, the impact load input to the front side members is transmitted from one side in the vehicle width direction to the other side along the dash crossmember and the battery crossmember joined to the dash crossmember. Thus, the impact load is not borne by just the one side of the vehicle that has been impacted.

A vehicle front portion structure of a tenth aspect is the ninth aspect, wherein the left and right pair of front side members and the dash crossmember are integrally molded.

According to the vehicle front portion structure of the tenth aspect, the impact load input to the front side members is efficiently dispersed to the integrally molded dash crossmember.

A vehicle front portion structure of an eleventh aspect is the first aspect, wherein the battery crossmember defines a part of a battery case housing the battery.

According to the vehicle front portion structure of the eleventh aspect, the impact load input to the battery crossmember is dispersed to the entire battery case housing the battery.

A vehicle front portion structure of a twelfth aspect is the fourth aspect, wherein the vehicle front portion structure further has a left and right pair of battery side members that extend in a vehicle rearward direction from both vehicle width direction end portions of the battery crossmember, and the left and right pair of side portions are secured to the battery crossmember in positions closer to the battery side members than to a vehicle width direction center of the battery crossmember.

According to the vehicle front portion structure of the twelfth aspect, the side portions of the suspension member are secured to the battery crossmember in positions close to the battery side members. Thus, the impact load transmitted from the suspension member to the battery crossmember is dispersed to the left and right battery side members by short load paths.

The vehicle front portion structure of the first aspect can, in an electric car having a battery disposed under the cabin, protect the battery from shock at the time of a frontal impact and protect the cabin by dispersing the impact load input to the vehicle front portion.

The vehicle front portion structure of the second aspect can further inhibit shock at the time of a frontal impact from traveling to the battery and can efficiently transmit to the battery crossmember the impact load traveling from the vehicle front side in the vehicle rearward direction.

The vehicle front portion structure of the third aspect can efficiently disperse an impact load to the battery crossmember compared with a case where the rear end side of the suspension member is joined via another member to the battery crossmember.

The vehicle front portion structure of the fourth aspect can efficiently disperse an impact load via the surfaces of the flange portions to the battery crossmember.

The vehicle front portion structure of the fifth aspect can efficiently transmit an impact load in the vehicle width direction to the battery crossmember.

The vehicle front portion structure of the sixth aspect can ensure multiple load paths from the suspension member for an impact load at the time of a frontal impact.

The vehicle front portion structure of the seventh aspect can further reduce shock to the battery by transferring an impact load from the battery crossmember to the dash crossmember.

The vehicle front portion structure of the eighth aspect can reduce the amount of an impact load input to the cabin.

The vehicle front portion structure of the ninth aspect can disperse to the opposite side of the vehicle an impact load input to one of the front side members at the time of an offset impact, an oblique impact, and a small overlap impact.

The vehicle front portion structure of the tenth aspect can efficiently disperse to the dash crossmember an impact load input to the front side members at the time of a frontal impact.

The vehicle front portion structure of the eleventh aspect can widely disperse an impact load input to the vehicle front portion using the entire battery case as a load path.

The vehicle front portion structure of the twelfth aspect can inhibit an impact load transmitted from the suspension member to the battery crossmember from being input to the battery and the cabin.

### BRIEF DESCRIPTION OF THE DRAWINGS

An exemplary embodiment of the present disclosure will be described in detail based on the following figures, wherein:
FIG. 1 is a plan view of a vehicle front portion structure pertaining to the embodiment; and
FIG. 2 is a cross-sectional view taken along line 2-2 of FIG. 1.

### DETAILED DESCRIPTION

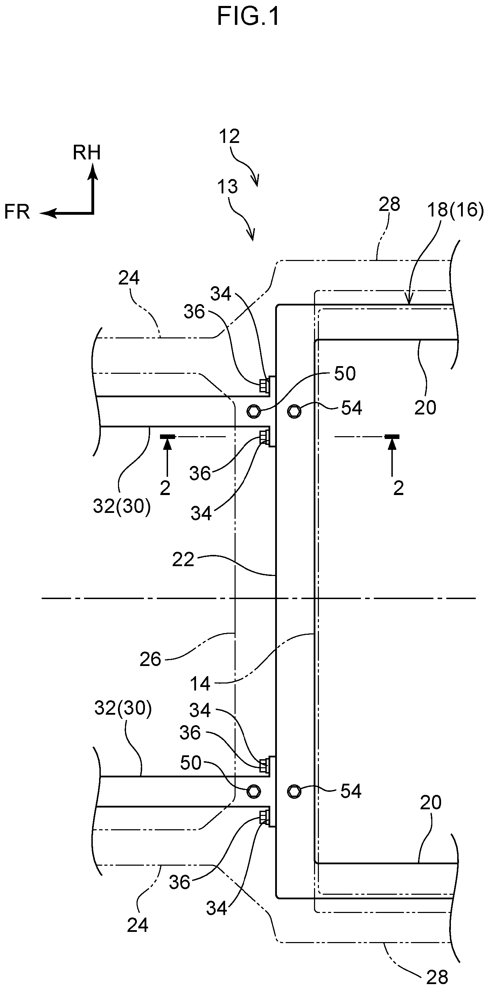

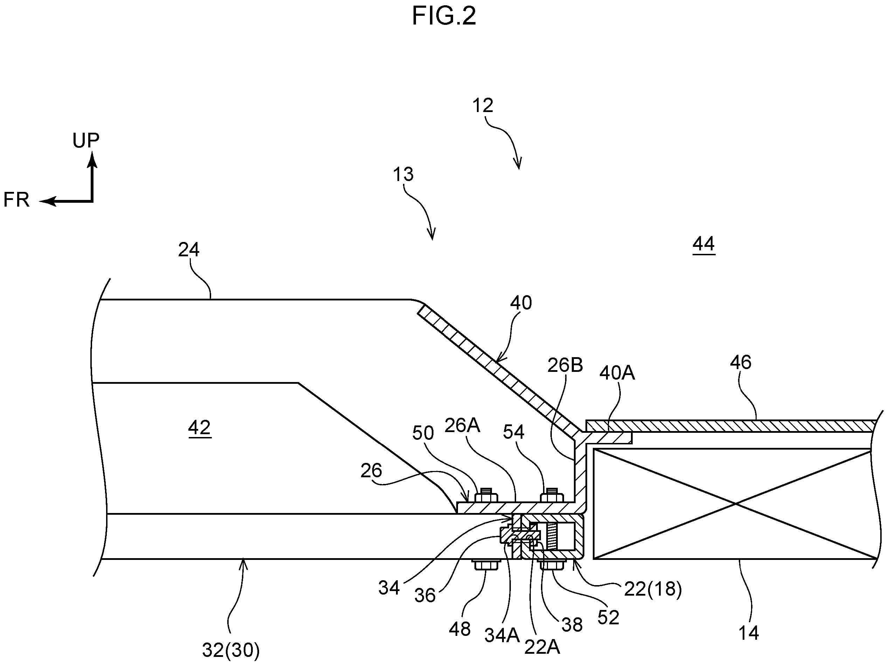

A vehicle front portion structure pertaining to an embodiment of the present disclosure will be described below using FIG. 1 and FIG. 2. It will be noted that arrow FR, arrow UP, and arrow RH appropriately illustrated in the drawings indicate a forward direction, an upward direction, and a rightward direction in a left and right direction (width direction) of the vehicle, respectively. Furthermore, when the directions of front and rear, up and down, and left and right are used without specification in the following description, these shall mean front and rear in the vehicle front and rear direction, up and down in the vehicle up and down direction, and left and right in the vehicle left and right direction (width direction), respectively.

FIG. 1 illustrates a plan view of a front portion 13 of a vehicle 12 to which the vehicle front portion structure pertaining to the present embodiment has been applied. The vehicle 12 is an electric car having a battery 14 under the floor (on the vehicle lower side of a floor panel 46 of a cabin 44 described later). The battery 14 is housed in a battery case 16. The battery case 16 is, as an example, configured to include a battery frame 18 configured in the shape of a substantially rectangular frame as viewed in a plan view, an upper panel (not illustrated in the drawings) disposed on the upper side of the battery frame 18, and a lower panel (not illustrated in the drawings) disposed on the lower side of the battery frame 18. It will be noted that the configuration of the battery case is not limited to what is described above.

The battery frame 18 includes a left and right pair of battery side members 20 that extend in the vehicle front and rear direction on both end portions in the vehicle width direction. Furthermore, the battery frame 18 includes a vehicle front-side battery crossmember 22 that intercouples in the vehicle width direction the front end portions of the left and right pair of battery side members 20 and a vehicle rear-side battery crossmember (not illustrated in the drawings) that intercouples in the vehicle width direction the rear end portions of the left and right pair of battery side members 20.

The vehicle front portion structure is configured to include a left and right pair of front side members 24 that extend in the vehicle front and rear direction on both vehicle width direction sides and a dash crossmember 26 that intercouples in the vehicle width direction the rear end portions of the left and right pair of front side members 24. The left and right pair of battery side members 20 are disposed more outward in the vehicle width direction than the left and right pair of front side members 24. Furthermore, the battery crossmember 22 is disposed on the vehicle lower side of the dash crossmember 26 (see FIG. 2). The left and right pair of front side members 24 and the dash crossmember 26 are integrally molded by die casting. It will be noted that the left and right pair of front side members and the dash crossmember are not limited to being die-cast and may also be integrally molded with resin for example.

Furthermore, on both width direction end portions of the later described floor panel 46 of the vehicle 12, a left and right pair of rockers 28 are disposed. The left and right pair of rockers 28 extend in the vehicle front and rear direction on the vehicle width direction outer sides of the left and right pair of battery side members 20. The dash crossmember 26 intercouples in the vehicle width direction the front end portions of the left and right pair of rockers 28. It will be noted that in FIG. 1 the left and right pair of front side members 24 and the dash crossmember 26 that are integrally molded and the left and right pair of rockers 28 that are joined to the dash crossmember 26 are indicated by long-dashed double short-dashed lines.

Moreover, the front portion 13 of the vehicle 12 is provided with a suspension member 30 on which inner ends of suspension arms (not illustrated in the drawings) are swingably supported. The suspension member 30 is disposed on the vehicle width direction inner side of the left and right pair of front side members 24 as viewed in a plan view and is disposed on the vehicle lower side of the front side members 24 as viewed in a side view.

The suspension member 30 includes a left and right pair of side portions 32 that extend in the vehicle front and rear direction on both vehicle width direction sides. The left and right pair of side portions 32 are disposed on the vehicle front side of the battery crossmember 22 at substantially the same height as the battery crossmember 22 and on the vehicle lower side of the dash crossmember 26. The left and right pair of side portions 32 are configured to be bilaterally symmetrical, so in the following description the side portion 32 on the vehicle right side will be described and description of the side portion 32 on the vehicle left side will be omitted.

The side portion 32 is formed in the shape of a polygonal tube having a substantially rectangular closed cross-section as viewed from the vehicle front and rear direction. On the rear end portion of the side portion 32 is formed a left and right pair of flange portions 34. The flange portion 34 on the right side extends in the vehicle rightward direction from the rear end portion of the vehicle right-side surface of the side portion 32. Likewise, the left-side flange portion 34 extends in the vehicle leftward direction from the rear end portion of the vehicle left-side surface of the side portion 32. The left and right pair of flange portions 34 are, as an example, formed in substantially rectangular shapes as viewed from the vehicle front and rear direction.

Through holes 34A (see FIG. 2) are formed in the vehicle up and down direction and vehicle width direction center portions of the left and right pair of flange portions 34. Furthermore, through holes 22A (see FIG. 2) are formed in the vehicle front-side surface of the battery crossmember 22 in positions corresponding to the through holes 34A (see FIG. 2) in the left and right pair of flange portions 34. Bolts 36 are inserted through the through holes 34A (see FIG. 2) and the through holes 22A (see FIG. 2). Furthermore, weld nuts 38 that screw together with the bolts 36 are provided around the through holes 22A in the battery crossmember 22. The left and right pair of flange portions 34 are fastened by the bolts 36 and the weld nuts 38 (see FIG. 2) to the vehicle front-side surface of the battery crossmember 22. In other words, the side portions 32 are fastened in the vehicle front and rear direction to the battery crossmember 22.

Here, the side portion 32 on the vehicle right side is secured to the battery crossmember 22 in a position closer to the battery side member 20 on the vehicle right side than to the vehicle width direction center of the battery crossmember 22.

As illustrated in FIG. 2, the dash crossmember 26 is formed substantially in an L shape as viewed in a vehicle side view and is configured to include a bottom portion 26A that extends in the vehicle front and rear direction and a rear wall portion 26B that extends in the vehicle upward direction from the rear end portion of the bottom portion 26A.

A dash panel 40 is integrally molded on the upper side of the dash crossmember 26. The dash panel 40 is formed in a downward slope inclined in the vehicle downward direction heading in the vehicle rearward direction. The dash panel 40 is a member having the function of dividing a power unit compartment 42 from the cabin 44, and pedals are disposed on its inclined surface. It will be noted that, as an example, the lower end portion of another dash panel (not illustrated in the drawings) extending in the vehicle up and down direction and the vehicle width direction is joined to the front end portion of the dash panel 40 illustrated in FIG. 2. In that case, the dash panel 40 corresponds to a dash panel lower member while the other dash panel corresponds to a dash panel upper member. On the rear end portion of the dash panel 40 is formed an extension portion 40A that extends in the vehicle rearward direction from the upper end portion of the rear wall portion 26B of the dash crossmember 26. The floor panel 46 that defines the floor of the cabin 44 is placed on the extension portion 40A. Specifically, the vehicle lower-side surface of the front end portion of the floor panel 46 is secured to the vehicle upper-side surface of the extension portion 40A. It will be noted that the vehicle 12 need not include the floor panel 46. In this case, the upper panel (not illustrated in the drawings) disposed on the upper side of the battery frame 18 may function as a floor panel.

The front portion of the bottom portion 26A of the dash crossmember 26 is secured to the vehicle upper-side surfaces of the left and right pair of side portions 32 of the suspension member 30. Furthermore, the rear portion of the bottom portion 26A of the dash crossmember 26 is secured to the vehicle upper-side surface of the battery crossmember 22. In the bottom portion 26A of the dash crossmember 26 are formed a left and right pair of suspension member-use through holes (not illustrated in the drawings) for fastening to the suspension member 30 and a left and right pair of battery crossmember-use through holes (not illustrated in the drawings) for fastening to the battery crossmember 22. The suspension member-use through holes (not illustrated in the drawings) and the battery crossmember-use through holes (not illustrated in the drawings) are, as an example, formed next to each other in the vehicle front and rear direction.

In upper plates formed on the vehicle upper sides and lower plates formed on the vehicle lower sides of the rear end portions of the side portions 32 of the suspension member 30 are formed upper and lower pairs of through holes (none are illustrated in the drawings) that run through the plates in their thickness direction. Bolts 48 are inserted through the suspension member-use through holes (not illustrated in the drawings) in the dash crossmember 26 and the upper and lower pairs of through holes (not illustrated in the drawings) in the side portions 32. The bolts 48 are screwed together with nuts 50. Because of this, the rear end portions of the side portions 32 of the suspension member 30 are fastened to the front portion of the bottom portion 26A of the dash crossmember 26. In other words, the front portion of the bottom portion 26A of the dash crossmember 26 and the rear end portions of the side portions 32 of the suspension member 30 are fastened in the vehicle up and down direction.

Furthermore, the battery crossmember 22 is formed in the shape of a polygonal tube having a substantially rectangular closed cross-section as viewed from the vehicle width direction. In an upper plate formed on the vehicle upper side and a lower plate formed on the vehicle lower side of the battery crossmember 22 are formed upper and lower pairs of through holes (none are illustrated in the drawings) that run through the plates in their thickness direction. Bolts 52 are inserted through the battery crossmember-use through holes (not illustrated in the drawings) in the dash crossmember 26 and the upper and lower pairs of through holes (not illustrated in the drawings) in the battery crossmember 22. The bolts 52 are screwed together with nuts 54. Because of this, the battery crossmember 22 is fastened to the rear portion of the bottom portion 26A of the dash crossmember 26. In other words, the rear portion of the bottom portion 26A of the dash crossmember 26 and the battery crossmember 22 are fastened in the vehicle up and down direction.

### (Action)

Next, the action of the present embodiment will be described.

According to the vehicle front portion structure pertaining to the present embodiment, the battery crossmember 22 is disposed on the vehicle front side of the battery 14. Because of this, the impact load input to the battery 14 at the time of a frontal impact to the vehicle 12 is reduced. Furthermore, the rear end side of the suspension member 30 is joined to the battery crossmember 22. Thus, the impact load input to the suspension member 30 at the time of a frontal impact to the vehicle 12 is transmitted to the battery crossmember 22 extending in the vehicle width direction and is dispersed along the vehicle width direction.

Furthermore, according to the vehicle front portion structure pertaining to the present embodiment, because the rear end side of the suspension member 30 is secured to the vehicle front-side surface of the battery crossmember 22, the impact load input to the suspension member 30 becomes input to the vehicle front-side surface of the battery crossmember 22. For this reason, the distance from the battery 14 to the load input point (site) becomes longer and the effect on the battery 14 is reduced. Furthermore, the impact load that travels from the vehicle front side in the vehicle rearward direction at the time of a frontal impact is efficiently transmitted because it is input from the vehicle front-side surface to the battery crossmember 22.

Moreover, according to the vehicle front portion structure pertaining to the present embodiment, the impact load input to the suspension member 30 at the time of a frontal impact to the vehicle 12 is transmitted in the vehicle rearward direction using the side portions 32 extending in the vehicle front and rear direction as load paths. Additionally, the impact load transmitted from the side portions 32 in the vehicle rearward direction is input via the flange portions 34 to the battery crossmember 22. Furthermore, the flange portions 34 formed on the rear end portions of the side portions 32 planarly abut against the battery crossmember, so the impact load input to the suspension member 30 is efficiently dispersed to the battery crossmember 22.

Moreover still, according to the vehicle front portion structure pertaining to the present embodiment, the flange portions 34 extend in the same direction (the vehicle width direction) as the direction in which the battery crossmember 22 extends. Thus, the impact load can be efficiently transmitted in the vehicle width direction from the suspension member 30 to the battery crossmember 22.

Furthermore, according to the vehicle front portion structure pertaining to the present embodiment, the impact load at the time of a frontal impact to the vehicle 12 is dispersed from the suspension member 30 not only to the battery crossmember 22 but also to the dash crossmember 26.

Moreover, according to the vehicle front portion structure pertaining to the present embodiment, at the time of a frontal impact to the vehicle 12, the impact load input from the suspension member 30 to the battery crossmember 22 is transmitted to the dash crossmember 26.

Moreover still, according to the vehicle front portion structure pertaining to the present embodiment, the impact load at the time of a frontal impact input from the suspension member 30 and the battery crossmember 22 to the dash crossmember 26 is dispersed to the left and right pair of rockers 28 disposed on both vehicle width direction sides of the vehicle body floor.

Furthermore, according to the vehicle front portion structure pertaining to the present embodiment, the impact load input from the vehicle front side to the front side members 24 at the time of a frontal impact to the vehicle 12 is transmitted via the dash crossmember 26 to the battery crossmember 22. Particularly in the case of an offset impact, an oblique impact, and a small overlap impact, the impact load is to a great extent input to one of the front side members 24. At this time, the impact load input to the front side members 24 is transmitted from one side in the vehicle width direction to the other side along the dash crossmember 26 and the battery crossmember 22 joined to the dash crossmember 26. Thus, the impact load is not borne by just the one side of the vehicle that has been impacted.

Moreover, according to the vehicle front portion structure pertaining to the present embodiment, the left and right pair of front side members 24 and the dash crossmember 26 are integrally molded, so the impact load input to the front side members 24 at the time of a frontal impact to the vehicle 12 is efficiently transmitted to the dash crossmember 26. Furthermore, because the left and right pair of front side members 24 and the dash crossmember 26 are integrally molded, the number of parts and the number of assembly manhours can be reduced.

Moreover still, according to the vehicle front portion structure pertaining to the present embodiment, the battery crossmember 22 defines a part of the battery case 16 housing the battery 14, so the impact load input to the battery crossmember 22 is widely dispersed to the entire battery case 16.

Furthermore, according to the vehicle front portion structure pertaining to the present embodiment, the side portions 32 of the suspension member 30 are secured to the battery crossmember 22 in positions close to the battery side members 20. Thus, the impact load transmitted from the suspension member 30 to the battery crossmember 22 is efficiently transmitted to the left and right battery side members 20. In this way, the vehicle front portion structure has multiple load paths for an impact load sustained at the time of a frontal impact to the vehicle 12.

### (Supplementary Description of the Embodiment)

Although in the above embodiment the suspension member 30 was described as being fastened to the battery crossmember 22, and the suspension member 30 and the battery crossmember 22 were described as being fastened to the dash crossmember 26, the members are not limited to this. For example, the members may be joined by another joining method such as mating and/or welding. For example, the suspension member may be connected to the battery crossmember via another member.

Furthermore, although in the above embodiment the suspension member 30 was described as being secured to the vehicle front-side surface of the battery crossmember 22, the suspension member is not limited to this. For example, the suspension member may be secured to the vehicle lower-side surface of the battery crossmember.

Moreover, although in the above embodiment the suspension member 30 was described as including the left and right pair of side portions 32 that extend in the vehicle front and rear direction, and the rear end portions of the side portions 32 were described as being fastened to the battery crossmember 22, the suspension member is not limited to this. For example, the suspension member may be formed in the shape of a rectangular frame as viewed in a plan view, include a crossmember that extends in the vehicle width direction on the vehicle rear side, and be joined at that crossmember to the battery crossmember.

Moreover still, although in the above embodiment the left and right pair of flange portions 34 extending in the vehicle width direction were described as being formed on the rear end portion of each of the side portions 32, and the suspension member 30 was described as being secured at the left and right pairs of flange portions 34 to the battery crossmember 22, they are not limited to this. For example, the flange portions of the side portions may extend in the vehicle up and down direction. Furthermore, the side portions need not include the flange portions. For example, the rear end portions of the side portions formed in the shape of polygonal tubes may be welded to the battery crossmember. Moreover, for example, in a case where the suspension member is connected to the battery crossmember via another member provided extending on the rear end sides of the suspension member, flange portions may be formed on the other member.

Furthermore, although in the above embodiment the rear end portion of the suspension member 30 was described as being joined in the vehicle up and down direction to the dash crossmember 26, the suspension member is not limited to this. For example, the suspension member may be joined in the vehicle front and rear direction to the dash crossmember. Furthermore, for example, the suspension member is not limited to being joined at its rear end portion to the dash crossmember and may be joined to the dash crossmember in a position of the rear portion on the vehicle front side of the rear end portion. Furthermore, the suspension member need not be joined to the dash crossmember.

Moreover, although in the above embodiment the battery crossmember 22 was described as being joined in the vehicle up and down direction to the dash crossmember 26, the battery crossmember is not limited to this. For example, the battery crossmember and the dash crossmember may be joined in the vehicle front and rear direction. Furthermore, the battery crossmember need not be joined to the dash crossmember.

Moreover still, although in the above embodiment the dash crossmember 26 was described as intercoupling in the vehicle width direction the front end portions of the left and right pair of rockers 28, it is not limited to this. For example, the dash crossmember is not limited to intercoupling the front end portions of the left and right pair of rockers and may also intercouple in the vehicle width direction the left and right pair of rockers in positions of the front portions on the vehicle rear side of the front end portions. Furthermore, for example, the dash crossmember may interconnect in the vehicle width direction the left and right pair of rockers via other members.

Furthermore, although in the above embodiment the dash crossmember 26 was described as intercoupling in the vehicle width direction the rear end portions of the left and right pair of front side members 24, the dash crossmember is not limited to this. For example, the dash crossmember is not limited to intercoupling the rear end portions of the left and right pair of front side members and may intercouple in the vehicle width direction the left and right pair of front side members in positions of the rear portions on the vehicle front side of the rear end portions. Furthermore, for example, the dash crossmember may interconnect in the vehicle width direction the left and right pair of front side members via other members such as the dash panel.

Moreover, although in the above embodiment the left and right pair of front side members 24 and the dash crossmember 26 were described as being integrally molded by gigacasting, they are not limited to this. For example, one front side member and the dash crossmember may be integrally molded, while the other front side member is separately molded. Furthermore, the left and right front side members and the dash crossmember may be separately molded.

Moreover still, although in the above embodiment the battery crossmember 22 was described as defining a part of the battery case 16 housing the battery 14, the battery crossmember is not limited to this. For example, the battery case housing the battery and the battery frame including the battery crossmember may be defined separately. In this case, the battery frame may double as a frame configuring the vehicle body.

Furthermore, although in the above embodiment the side portion 32 on the vehicle right side was described as being secured to the battery crossmember 22 in a position closer to the battery side member 20 on the vehicle right side than to the vehicle width direction center of the battery crossmember 22, and the side portion 32 on the vehicle left side was described as being bilaterally symmetrical to the side portion 32 on the vehicle right side, the side portions are not limited to this. For example, the left and right pair of side portions may be secured in positions obtained by dividing the battery crossmember into three equal parts in the vehicle width direction.

In relation to the above embodiment, the following supplementary notes are also disclosed.

### (Supplementary Note 1)

A vehicle front portion structure comprising:
a battery crossmember that is disposed at a vehicle front side of a battery arranged under a cabin and that extends in a vehicle width direction; and
a suspension member that is disposed at a vehicle front side of the battery crossmember and that is connected at its rear end side to the battery crossmember.

### (Supplementary Note 2)

The vehicle front portion structure of supplementary note 1, wherein the suspension member is connected to a vehicle front-side surface of the battery crossmember.

### (Supplementary Note 3)

The vehicle front portion structure of supplementary note 1 or supplementary note 2, wherein the rear end side of the suspension member is directly secured to the battery crossmember.

### (Supplementary Note 4)

The vehicle front portion structure of supplementary note 2 or supplementary note 3, wherein:
the suspension member has a left and right pair of side portions that extend in a vehicle front and rear direction,
flange portions are formed at rear end sides of the left and right pair of side portions, and
the suspension member is secured at the flange portions to the vehicle front-side surface of the battery crossmember.

### (Supplementary Note 5)

The vehicle front portion structure of supplementary note 4, wherein the flange portions extend in the vehicle width direction from the rear end portions of the left and right pair of side portions.

### (Supplementary Note 6)

The vehicle front portion structure of any one of supplementary note 1 to supplementary note 5, wherein a rear portion of the suspension member is joined to a dash crossmember that extends in the vehicle width direction.

### (Supplementary Note 7)

The vehicle front portion structure of any one of supplementary note 1 to supplementary note 6, wherein the battery crossmember is joined to a dash crossmember that extends in the vehicle width direction.

### (Supplementary Note 8)

The vehicle front portion structure of supplementary note 6 or supplementary note 7, wherein the dash crossmember is joined to front portions of a left and right pair of rockers that extend in a vehicle front and rear direction at both vehicle width direction sides of a vehicle body floor.

### (Supplementary Note 9)

The vehicle front portion structure of any one of supplementary note 6 to supplementary note 8, wherein:
the vehicle front portion structure further has a left and right pair of front side members that extend in a vehicle front and rear direction at both vehicle width direction sides of the vehicle front portion, and
the dash crossmember is joined to rear portions of the left and right pair of front side members.

### (Supplementary Note 10)

The vehicle front portion structure of supplementary note 9, wherein the left and right pair of front side members and the dash crossmember are integrally molded.

### (Supplementary Note 11)

The vehicle front portion structure of any one of supplementary note 1 to supplementary note 10, wherein the battery crossmember defines a part of a battery case housing the battery.

### (Supplementary Note 12)

The vehicle front portion structure of supplementary note 4 or supplementary note 5, wherein:
a left and right pair of battery side members extend in a vehicle rearward direction from both vehicle width direction end portions of the battery crossmember, and
the left and right pair of side portions are secured to the battery crossmember in positions closer to the left and right pair of battery side members than to a vehicle width direction center of the battery crossmember.

## Claims

1. A vehicle front portion structure comprising:
a battery crossmember (22) that is disposed at a vehicle front side of a battery (14) arranged under a cabin (44) and that extends in a vehicle width direction; and
a suspension member (30) that is disposed at a vehicle front side of the battery crossmember (22) and that is connected at its rear end side to the battery crossmember (22).

2. The vehicle front portion structure of claim 1, wherein the suspension member (30) is connected to a vehicle front-side surface of the battery crossmember (22).

3. The vehicle front portion structure of claim 1 or claim 2, wherein the rear end side of the suspension member (30) is directly secured to the battery crossmember (22).

4. The vehicle front portion structure of claim 2 or claim 3, wherein:
the suspension member (30) has a left and right pair of side portions (32) that extend in a vehicle front and rear direction,
flange portions (34) are formed at rear end sides of the left and right pair of side portions (32), and
the suspension member (30) is secured at the flange portions (34) to the vehicle front-side surface of the battery crossmember (22).

5. The vehicle front portion structure of claim 4, wherein the flange portions (34) extend in the vehicle width direction from the rear end sides of the left and right pair of side portions (32).

6. The vehicle front portion structure of any one of claim 1 to claim 5, wherein a rear portion of the suspension member (30) is joined to a dash crossmember (26) that extends in the vehicle width direction.

7. The vehicle front portion structure of any one of claim 1 to claim 6, wherein the battery crossmember (22) is joined to a dash crossmember (26) that extends in the vehicle width direction.

8. The vehicle front portion structure of claim 6 or claim 7, wherein the dash crossmember (26) is joined to front portions of a left and right pair of rockers (28) that extend in a vehicle front and rear direction at both vehicle width direction sides of a vehicle body floor.

9. The vehicle front portion structure of any one of claim 6 to claim 8, wherein:
the vehicle front portion structure further has a left and right pair of front side members (24) that extend in a vehicle front and rear direction at both vehicle width direction sides of the vehicle front portion, and
the dash crossmember (26) is joined to rear portions of the left and right pair of front side members (24).

10. The vehicle front portion structure of claim 9, wherein the left and right pair of front side members (24) and the dash crossmember (26) are integrally molded.

11. The vehicle front portion structure of any one of claim 1 to claim 10, wherein the battery crossmember (22) defines a part of a battery case (16) housing the battery (14).

12. The vehicle front portion structure of claim 4 or claim 5, wherein:
a left and right pair of battery side members (20) extend in a vehicle rearward direction from both vehicle width direction end portions of the battery crossmember (22), and
the left and right pair of side portions (32) are secured to the battery crossmember (22) in positions closer to the left and right pair of battery side members (20) than to a vehicle width direction center of the battery crossmember (22).
